# EUROPEAN PATENT APPLICATION

(11) **EP 3 147 134 A1**
(43) Date of publication of application: **29.03.2017**
(21) Application number: 15795452.0
(22) Date of filing: 21.05.2015
(51) Int. Cl.: B43L 1/04, G06F 1/16

(54) **ELECTRONIC BOARD AND ELECTRONIC BOARD SYSTEM INCLUDING SAME**

(30) Priority: 22.05.2014 KR 20140061706
(71) Applicant: Solidedu, Inc., Seongnam-si, Gyeonggi-do 463-400 (KR)
(72) Inventor: LEE, Myeong Hwan, Seongnam-si Gyeonggi-do 463-400 (KR)
(74) Representative: Vossius & Partner Patentanwälte Rechtsanwälte mbB
(86) International application number: PCT/KR2015/005112
(87) International publication number: WO 2015/178701

(57) **Abstract**

Provided is an electronic board system including an electronic board which includes a sheet on which a pattern for determining position information is printed and a glass layer which is formed on the sheet and has a thickness of 0.1 mm to 3 mm, an electronic pen which senses the pattern and extracts position information on the electronic board from the sensed pattern, and an information processing apparatus which receives the position information from the electronic pen and controls a processing result according to the received position information to be output on the electronic board.

## Description

### [Technical Field]

The present invention relates to an electronic board and an electronic board system including the same.

### [Background Art]

An electronic pen is a pen of a new concept including analog and digital concepts. When letters are written on paper using an electronic pen, written information may be transmitted to a computer and may be managed in the form of an image file. Although a document written with a general pen may be managed as an image file when being scanned by a scanner (an electronic color separator), a document written with an electronic pen does not need a scanning process and has an advantage of being easily managed using a separate program.

Meanwhile, in a smart educational era, an education method using an electronic pen and an electronic board has quickly spread. When notes are taken on an electronic board using an electronic pen, position information may be extracted from a pattern formed on the electronic board and the extracted position information may be converted into note data and then may be managed as an image file, a moving image file, a voice file, a text file, etc.

The electronic board described above has to include not only a function of converting the position information extracted using the electronic pen into the note data but also an image projection function using a projector and a function of taking notes using a marker pen.

For this, there is a gap adhering technology of adhering a screen to an edge of a glass layer and maintaining a gap therebetween in a vacuum state. However, according to such technology, since durability of the glass layer is low, pieces of glass may be scattered when the glass layer is broken. Also, in order to maintain the gap between the screen and the glass layer in the vacuum state, a front glass side and a rear glass side are necessary and a process is complicated. Also, when thick glass is used to increase the durability of the glass layer, since a projected image is easily shown in a double image, quality of the image is deteriorated.

### [Disclosure of Invention]

### [Technical Problem]

One aspect of the present invention provides an electronic board

### [Technical Solution]

One aspect of the present invention provides an electronic board including a sheet on which a pattern for determining position information is printed and a glass layer which is formed on the sheet and has a thickness of 0.1 mm to 3 mm.

The sheet and the glass layer may be entirely adhered.

The sheet and the glass layer may be adhered using an ultraviolet (UV) adhering technology.

The glass layer may include tempered glass with a surface treated to be non-reflective.

The pattern may be printed using an infrared absorption ink.

The infrared absorption ink may include one of a phthalocyanine-based compound, a naphthalocyanine-based compound, an aminium-based compound, and a mixture thereof.

One aspect of the present invention provides an electronic board system including an electronic board which comprises a sheet on which a pattern for determining position information is printed and a glass layer which is formed on the sheet and has a thickness of 0.1 mm to 3 mm, an electronic pen which senses the pattern and extracts position information on the electronic board from the sensed pattern, and an information processing apparatus which receives the position information from the electronic pen and controls a processing result according to the received position information to be output on the electronic board.

### [Advantageous Effects]

According to an embodiment of the present invention, a shadow phenomenon and a double image which occur when an image is projected at a short distance from an electronic board may be reduced. Accordingly, an electronic board with improved image quality may be provided.

Also, even though a glass layer is damaged by an external impact, scattering of pieces of glass may be reduced. Also, a manufacturing process may be simplified and manufacturing costs and a weight thereof may be reduced.

### [Brief Description of Drawings]

FIG. 1 is a block diagram of an electronic board system according to one embodiment of the present invention.
FIG. 2 is view illustrating an example of an electronic pen according to one embodiment of the present invention.
FIG. 3 is a top view of an electronic board according to one embodiment of the present invention.
FIG. 4 is a block diagram of an information processing apparatus according to one embodiment of the present invention.
FIGS. 5 and 6 illustrate a dot pattern formed on the electronic board according to one embodiment of the present invention.
FIG. 7 is a cross-sectional view of the electronic board according to one embodiment of the present invention.

### [Mode for Invention]

Since the present invention may be variously modified and may have several embodiments, particular embodiments will be shown in the drawings and described in detail. However, it will be understood that the present invention is not limited to the particular embodiments and includes all modifications, equivalents, and substitutes included in the concept and scope of the present invention.

The terms second, first, etc. may be used for describing various components, but the components will not be limited by the terms. The terms are used only for distinguishing one element from others. For example, without departing from the scope of the present invention, a second component may be referred to as a first component, and similarly, the first component may be referred to as the second component. The term "and/or" includes any and all combinations or one of a plurality of associated listed items.

When it is stated that one component is "connected" to another component, it should be understood that it may be directly connected to the other component but another component may also exist therebetween. On the contrary, when it is stated that one component is "directly connected" to another component, it should be understood that another component does not exist therebetween.

Terms are used herein only to describe particular embodiments and do not intend to limit the present invention. Singular expressions, unless contextually otherwise defined, include plural expressions. Also, throughout the specification, it should be understood that the terms "comprise", "have", etc. are used herein to specify the presence of stated features, numbers, steps, operations, elements, components or combinations thereof but do not preclude the presence or addition of one or more other features, numbers, steps, operations, elements, components, or combinations thereof.

Unless otherwise defined, all terms used herein including technical or scientific terms have the same meanings generally understood by one of ordinary skill in the art. Terms as defined in dictionaries generally used should be understood as having meaning identical to meaning contextually defined in the art and should not be understood as ideally or excessively formal meaning unless definitely defined herein.

Hereinafter, the embodiments will be described in detail with reference to the attached drawings. However, regardless of reference numerals, identical or corresponding components will be referred to as the same reference numerals and a repeated description thereof will be omitted.

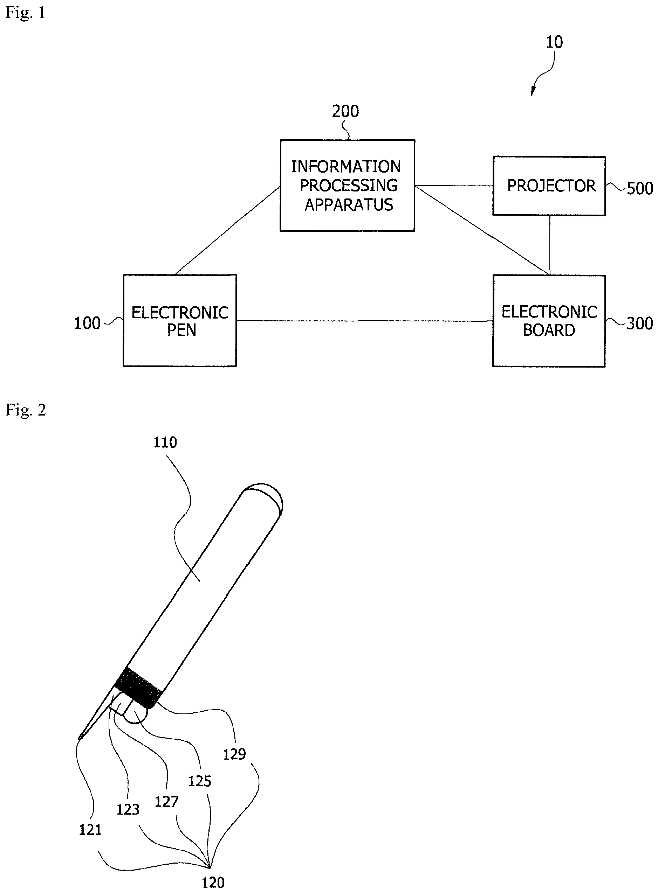

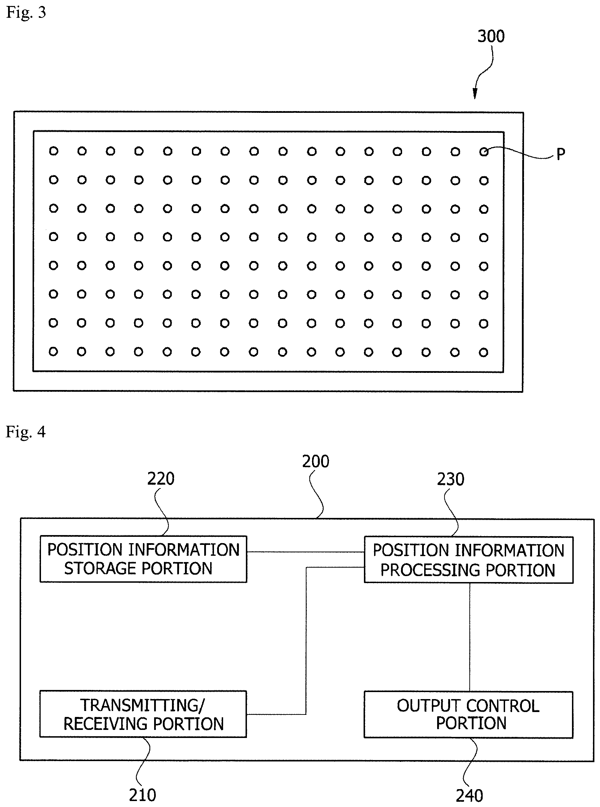

FIG. 1 is a block diagram of an electronic board system according to one embodiment of the present invention. FIG. 2 is view illustrating an example of an electronic pen according to one embodiment of the present invention. FIG. 3 is a top view of an electronic board according to one embodiment of the present invention. FIG. 4 is a block diagram of an information processing apparatus according to one embodiment of the present invention.

Referring to FIG. 1, an electronic board system 10 includes an electronic pen 100, an information processing apparatus 200, an electronic board 300, and a projector 400.

The electronic pen 100 senses pattern information on the electronic board 300 on which a pattern is formed and extracts position information from the sensed pattern information. Here, the pattern is a position determination means on the electronic board 300, and for example, may be variously formed in a dot shape, a straight line shape, a diagonal line shape, a curve line shape, a right shape, etc. Throughout the specification, for convenience of description, a dot pattern in a dot shape will be described as an example but is exemplary and does not limit the present invention.

The information processing apparatus 200 stores the position information received from the electronic pen 100. Also, the information processing apparatus 200 processes the stored position information and controls a processed result to be output on the electronic board 300.

The electronic board 300 outputs the result processed by the information processing apparatus 200.

The projector 400 projects a signal processed by the information processing apparatus 200 to the electronic board 300. For example, when a computer screen is displayed on the electronic board 300 and a certain area of the displayed computer screen is sensed by the electronic pen 100, the electronic pen 100 may extract and transmit position information of the sensed certain area to the information processing apparatus 200. Also, the information processing apparatus 200 may process an area corresponding to the position information received from the electronic pen 100 to be clicked and may control a computer screen according to a click to be output on the electronic board 300.

Referring to FIG. 2, the electronic pen 100 includes a body portion 110 and a note-taking portion 120 which is provided at one end of the body portion 110 and senses pattern information on a recording medium on which a dot pattern is formed.

The body portion 110 may include one of a composite resin such as acrylonitrite butadiene styrene (ABS) and poly carbonate (PC), a synthetic resin such as poly propylene (PP), poly phenylene sulfide (PPS), etc., a polymethyl methacrylate (PMMA) synthetic resin, a polystyrene (PS) synthetic resin, glass, metals, and a compound selected therefrom.

The body portion 110 may be configured in a shape with the same diameter or a shape with a wide top and a narrow bottom and may include covers (not shown) at both ends.

The note-taking portion 120 includes a pen tip unit 121 capable of writing on the electronic board 300, a pressure sensor 123 which generates pen pressure information applied to the pen tip unit 121, an infrared light source 125 which outputs infrared rays to the electronic board 300, an infrared sensor 127 which senses infrared rays scattered on the electronic board 300, and a detection unit 129 which detects pattern information and position information using the sensed infrared rays.

The pen tip unit 121 may be formed in a nib shape which protrudes outward from one end of the body portion 110. The pen tip unit 121, for example, may be configured to take notes using ink stored therein.

The pressure sensor 123 is adjacent to the pen tip unit 121 and may sense pressure applied to the pen tip unit 121. The pressure sensor 123 may calculate pressure proportional to a force applied to the pen tip unit 121 as a numerical value when the pen tip unit 121 comes in contact with the electronic board 300 and may generate pen pressure information.

The infrared light source 125 transmits infrared rays when the pen tip unit 121 comes in contact with the electronic board 300 or is being closer to the electronic board 300 at a certain distance or less.

The infrared sensor 127 is adjacent to the pen tip unit 121 and senses infrared rays scattered on the electronic board 300.

The detection unit 129 detects a dot pattern on the electronic board 300 using infrared rays sensed by the infrared sensor 127.

Referring to FIG. 3, a pattern P for distinguishing position information may be printed on the electronic board 300. A detailed description of the electronic board 300 will be described below.

Referring to FIG. 4, the information processing apparatus 200 includes a transmitting/receiving portion 210, a position information storage portion 220, a position information processing portion 230, and an output control portion 240.

The transmitting/receiving portion 210 receives position information extracted from the electronic pen 100. For this, the electronic pen 100 and the transmitting/receiving portion 210 may be connected with or without wires. For example, the electronic pen 100 and the transmitting/receiving portion 210 may communicate using communication protocols such as Bluetooth, a wireless local area network, etc. Also, the transmitting/receiving portion 210 may transmit a signal for controlling a result of processing a signal in the information processing apparatus 200 to be output on the electronic board 300. The transmitting/receiving portion 210, for example, may transmit and receive signals to or from the projector 400.

The position information storage portion 220 stores position information on the electronic board 300. For example, the position information storage portion 220 may match and store identification information of an electronic board with position information corresponding thereto.

The position information processing portion 230 processes signals using position information received from the electronic pen 100. For example, an area corresponding to the position information received from the electronic pen 100 may be processed as being clicked on a computer screen. Otherwise, it may be processed as notes taken according to the area corresponding to the position information received from the electronic pen 100.

Also, the output control portion 240 controls a signal processing result of the position information processing portion 230 to be output on the electronic board 300. For example, the output control portion 240 may control a computer screen according to a click to be output on the electronic board 300 or may control the contents of note to be output on the electronic board 300.

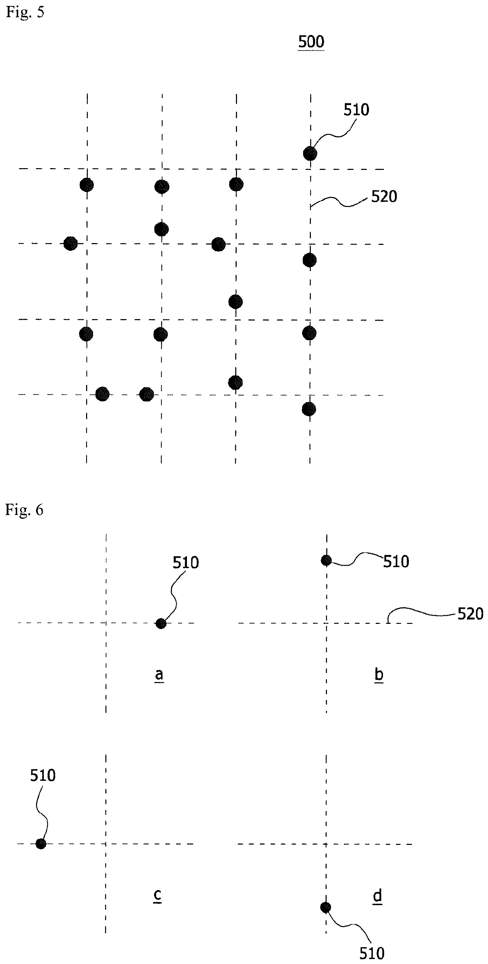

A dot pattern formed on the electronic board according to one embodiment of the present invention will be described in detail with reference to FIGS. 5 and 6.

Referring to FIG. 5, a dot pattern 500 may include a virtual grid line 520 and a plurality of marks 510 and each of the marks 510 may be formed around an intersection point of the virtual grid line 520 at certain intervals. Each of the marks 510 may provide pattern information according to a pattern value determined according to a position formed around the intersection point of the virtual grid line 520.

The marks 510 may be formed of an infrared absorption ink including, for example, one of a phthalocyanine-based compound, a naphthalocyanine-based compound, an aminium-based compound, and a mixture thereof. Accordingly, the infrared sensor 127 may sense infrared rays scattered at a part on which the mark 510 is not formed and the detection unit 129 may calculate pattern information according to a value of each of the marks 510 when 36 marks 510 in 6*6 are detected on the grid line 520 with a size of 6*6 using the scattered infrared rays.

The marks 510 may be formed around the intersection point of the virtual grid line 520 at certain intervals and may have respective values which are configured as a combination of at least two different numbers.

The marks 510 may have various shapes such as a circle, an oval, a polygon, a straight line, etc.

Referring to FIG. 6, the marks 510 may be present at four positions according to a relationship with the intersection point of the virtual grid line 520. The value of the mark 510 may be shown as "1" when the mark 510 is positioned on the right of the intersection point as a, may be shown as "2" when the mark 510 is positioned above the intersection point as b, may be shown "3" when the mark 510 is positioned on the left of the intersection point as c, and may be shown as "4" when the mark 510 is positioned below the intersection point as d. As described above, pattern information may be detected according to a position of the mark 510 based on the intersection point of the virtual grid line 520.

Also, the marks 510 may be diagonally formed instead of being on the virtual grid line 520 and a plurality of such marks 510 may be formed on the intersection points of one virtual grid line 520. In this case, the value of each of the marks 510 may be shown as arbitrary coordinates divided into an x coordinate and a y coordinate and pattern information may be provided from the value of the mark 510 shown in coordinates.

The virtual grid lines 520 may be horizontally and vertically formed at certain intervals. A distance between the grid lines 520 may be formed from 250 µm to 300 µm, and the marks 510 may be formed at a place at a distance of 1/4 to 1/8 from the intersection point of the virtual grid line 520. Otherwise, two or more related marks 510 may be formed around the intersection point of the virtual grid line 520.

In the electronic board system 10 described above, it is necessary to precisely sense a pattern formed on the electronic board 300 by the electronic pen 100 and to improve quality of an image displayed on the electronic board 300.

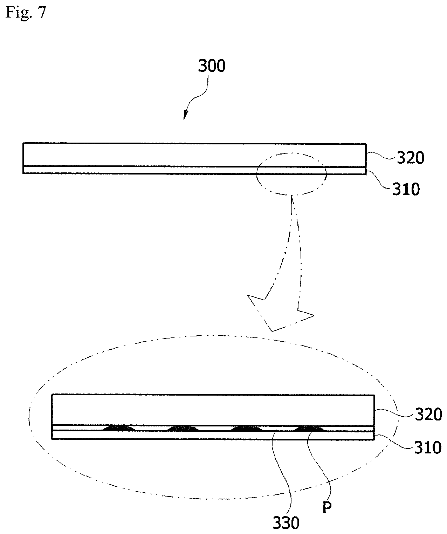

FIG. 7 is a cross-sectional view of the electronic board according to one embodiment of the present invention.

Referring to FIG. 7, the electronic board 300 includes a sheet 310 on which a pattern for determining position information is printed and a glass layer 320 formed on the sheet 310.

The pattern for determining the position information may be printed on the sheet. That is, the pattern printed on the sheet may be the marks 510 described with reference to FIGS. 5 and 6. Accordingly, the pattern may be printed using an infrared absorption ink and the infrared absorption ink may include one of a phthalocyanine-based compound, a naphthalocyanine-based compound, an aminium-based compound, and a mixture thereof.

Here, the sheet 310 may include a material which is easily printed and not influenced by temperature and humidity. For example, the sheet may be a synthetic paper or a sheet including a material of polyethylene terephthalate (PET). A thickness of the sheet 310 may be from 10 µm to 200 µm. When the thickness of the sheet satisfies such a numerical range, it is easy for printing and adhering.

Meanwhile, the glass layer 320 may be formed as tempered glass, and a surface of the glass layer 320 may be treated to be non-reflective. The surface of the glass layer 320 may be processed to be non-reflective using a method of coating one surface of the glass layer 320 with a non-reflective film, a method of chemically etching one surface of the glass layer 320, a method of sand-blasting one surface of the glass layer 320, etc. Accordingly, reflection of an image projected to the glass layer 320 may be prevented. Also, a thickness of the glass layer 320 may be 0.1 mm to 3 mm, preferably 0.2 mm to 2 mm, and more preferably 0.3 mm to 1 mm. When the thickness of the glass layer 320 satisfies such a numerical range, a double image may be minimized and quality of an image may be improved. Also, when the thickness of the glass layer 320 satisfies the numerical range, it is possible to increase a pattern recognition performance of the electronic pen 100 to recognize a pattern printed on the sheet 310. That is, when the thickness of the glass layer 320 exceeds 3 mm, a double image is caused in such a way that quality of an image is lowered and the pattern recognition performance is degraded. Also, when the thickness of the glass layer 320 is less than 0.1 mm, a process of adhering the sheet 310 to the glass layer 320 becomes complicated and strength of the electronic board 300 is decreased.

Also, the sheet 310 and the glass layer 320 may be entirely adhered. For this, an adhesive layer 330 may be formed between the sheet 310 and the glass layer 320. The adhesive layer 330 may include an adhesive applied to an entire surface (that is, the whole surface) of at least one of the sheet 310 and the glass layer 320. For this, the adhesive may be applied to one surface of the sheet 310 or the glass layer 320. The adhesive may be an ultraviolet (UV) curing adhesive. Accordingly, the sheet 310 and the glass layer 320 may be adhered using a UV adhering technology. The adhesive may be an epoxy adhesive. Here, a thickness of the adhesive layer 330 may be from 1 µm to 10 µm. Accordingly, due to the adhesive layer 330, there is no influence on quality of an image and the pattern recognition performance of the electronic pen 100.

As described above, since a gap between the sheet 310 and the glass layer 320 is filled with the adhesive layer 330 instead of a vacuum when the sheet 310 and the glass layer 320 are entirely adhered, even though the glass layer is damaged, a phenomenon in which pieces of glass are scattered may be prevented. Also, since it is unnecessary to maintain the gap between the sheet 310 and the glass layer 320 in a vacuum state, a rear glass side is not required. Accordingly, a process of manufacturing the electronic board 300 may become simplified, manufacturing costs may be reduced, and a weight may be reduced to be easily handled. Also, when the sheet 310 and the glass layer 320 are adhered by the UV adhering technology, adhering may become strong and durability of the electronic board 300 may be increased.

Meanwhile, although not shown in the drawings, the sheet 310 and the glass layer 320 may be stacked on a substrate layer. The substrate layer may support the sheet 310 and the glass layer 320.

The substrate layer may include, for example, iron. When the sheet 310 and the glass layer 320 are stacked on a substrate including iron, it may be diversely applied to an educational process utilizing teaching aids such as magnets, etc. Like the embodiment of the present invention, since the weight of the glass layer 320 is low when the thickness of the glass layer 320 is 0.1 to 3 mm, it is easy to stack on the substrate including iron. Also, since a magnetic force at the surface of the glass layer 320 is strong due to a small distance between the substrate and the surface of the glass layer 320, utilization of educational aids of magnets may be increased.

In the embodiment, the term "portion" used herein means a software component or a hardware component such as a field-programmable gate array (FPGA) and an application-specific integrated circuit (ASIC) and "the portion" may perform a certain function. However, "the portion" is not limited to software or hardware. "The portion" may be configured to be in a storage medium to be addressed and may be configured to play one or more processors. Accordingly, for example, "the portion" includes components such as software components, object-oriented software components, class components, and task components, processes, functions, properties, procedures, subroutines, segments of a program code, drivers, firmware, microcode, a circuit, data, a database, data structures, tables, arrays, and variables. The components and functions provided in "the portions" may be combined into a smaller number of components and "portions" or may be further divided into additional components and "portions'. Additionally, the components and "the portions" may be embodied to operate one or more central processing units (CPU) in a device or a security multimedia card.

Although exemplary embodiments of the present disclosure have been shown and described above, it would be appreciated by those skilled in the art that changes may be made in these embodiments without departing from the principles and spirit of the present disclosure, the scope of which is defined in the claims and their equivalents.

## Claims

1. An electronic board comprising:
a sheet on which a pattern for determining position information is printed; and
a glass layer which is formed on the sheet and has a thickness of 0.1 mm to 3 mm.

2. The electronic board of claim 1, further comprising an adhesive layer which is formed between the sheet and the glass layer and has a thickness of 1 to 10 µm.

3. The electronic board of claim 2, wherein the sheet and the glass layer are adhered using an ultraviolet (UV) adhering technology.

4. The electronic board of claim 1, wherein the glass layer comprises tempered glass with a surface treated to be non-reflective.

5. The electronic board of claim 1, wherein the pattern is printed using an infrared absorption ink.

6. The electronic board of claim 5, wherein the infrared absorption ink comprises one of a phthalocyanine-based compound, a naphthalocyanine-based compound, an aminium-based compound, and a mixture thereof.

7. An electronic board system comprising:
an electronic board which comprises a sheet on which a pattern for determining position information is printed and a glass layer which is formed on the sheet and has a thickness of 0.1 mm to 3 mm;
an electronic pen which senses the pattern and extracts position information on the electronic board from the sensed pattern; and
an information processing apparatus which receives the position information from the electronic pen and controls a processing result according to the received position information to be output on the electronic board.
